**Europäisches Patentamt**

**European Patent Office**

**Office européen des brevets**

(11) Veröffentlichungsnummer: **0 144 703 B1**

(12) **EUROPÄISCHE PATENTSCHRIFT**

(45) Veröffentlichungstag der Patentschrift:
**03.06.87**

(21) Anmeldenummer: **84113002.4**

(22) Anmeldetag: **29.10.84**

(51) Int. Cl.⁴: **C 08 G 63/46**, C 08 G 63/66, C 08 G 63/20

(54) **Acryloylgruppen enthaltende, emulgierbare, strahlenhärtbare Polyester, ein Verfahren zu ihrer Herstellung und ihre Verwendung.**

(30) Priorität: **10.11.83 DE 3340589**

(43) Veröffentlichungstag der Anmeldung:
**19.06.85 Patentblatt 85/25**

(45) Bekanntmachung des Hinweises auf die Patenterteilung:
**03.06.87 Patentblatt 87/23**

(84) Benannte Vertragsstaaten:
**AT BE CH DE FR GB IT LI NL SE**

(56) Entgegenhaltungen:
**DE - A - 3 106 570**
**FR - A - 2 343 761**
**GB - A - 2 025 996**

(73) Patentinhaber: **BAYER AG, Konzernverwaltung RP Patentabteilung, D-5090 Leverkusen 1 Bayerwerk (DE)**

(72) Erfinder: **Meixner, Jürgen, Dr., Bethelstrasse 18, D-4150 Krefeld 1 (DE)**
Erfinder: **Traenckner, Hans-Joachim, Dr., Amselweg 2, D-3032 Fallingbostel (DE)**
Erfinder: **Kremer, Wolfgang, Lilienweg 6, D-4173 Kerken 2 (DE)**
Erfinder: **Müller, Manfred, Friedrich-Gelsam-Strasse 34, D-5140 Erkelenz (DE)**

**Beschreibung**

Die Erfindung betrifft Acryloylgruppen enthaltende, emulgierbare, strahlenhärtbare Polyester, ein Verfahren zu ihrer Herstellung und ihre Verwendung. Vorzugsweise werden die wässrigen Emulsionen dieser Polyester zur Beschichtung von Holz und holzähnlichen Stoffen eingesetzt. Es kann dabei auf die Mitverwendung üblicher, externer oberflächenaktiver Mittel und reaktiver, strahlenhärtbarer Verdünnungsmittel verzichtet werden.

Acryloylgruppen enthaltende Polyester, die lösungsmittelfrei durch Strahlen gehärtet werden können, sind schon seit einiger Zeit bekannt. Die gewünschten Verarbeitungsviskositäten solcher Bindemittelsysteme werden durch Zusatz von copolymerisierbaren Reaktivverdünnern erreicht. Durch den Zusatz dieser niederviskosen Substanzen wird jedoch die Aushärtungsgeschwindigkeit des Bindemittels herabgesetzt. Ferner sind diese reaktiven Verdünnungsmittel physiologisch nicht unbedenklich.

Diese Nachteile lassen sich durch Verwendung wässriger Bindemittelemulsionen vermeiden.

Es sind bereits eine Vielzahl wässriger Emulsionen auf Basis Acryloylgruppen tragender Polyester bekannt. So sind durch die US-PS 4 033 920 anionisch wässrige Emulsionen mit selbstemulgierenden Bindemitteln bekannt. Die Selbstemulgierbarkeit der Bindemittel wird durch Neutralisation von freien Carboxylgruppen mit Basen wie Alkalilauge oder Aminen erreicht. Solche Emulsionen haben den Nachteil, dass die verwendeten Neutralisierungsmittel die Verseifung der Estergruppen im Bindemittel beschleunigen. Weiter verbleiben diese Neutralisierungsmittel mindestens teilweise im Lackfilm, wodurch dessen Wasserfestigkeit abnimmt. Sofern Amine als Neutralisierungsmittel verwendet werden, können diese eine Vergilbung des Lackfilms bewirken. Von Nachteil ist auch die verdickende Wirkung, die solche ionischen Gruppen enthaltende Bindemittel im Wasser verursachen.

In der DE-OS 2 853 921 (= US-PS 4 287 039) sind strahlenhärtbare, wässrige Bindemittelemulsionen beschrieben, die aus Wasser, mindestens einem polymerisierbarem C-C-Doppelbindungen enthaltendem Präpolymeren, einem externen Dispergierhilfsmittel und einem Photoinitiator bestehen. Die Herstellung der Dispersion erfolgt dadurch, dass das in einem inerten, organischen Lösungsmittel gelöste Präpolymer mit Hilfe von Dispergiermitteln wie Polyvinylpyrrolidon und/oder Vinylpyrrolidon-Vinylester-Copolymere in Wasser dispergiert wird. Anschliessend wird das organische Lösungsmittel durch Destillation entfernt. Nachteilig an diesem Prozess ist der zum Dispergieren benötigte grosse Aufwand durch das Abdestillieren des Lösungsmittels. Weiterhin werden die verwendeten Dispergatoren nicht in den Lackfilm eingebaut. Infolgedessen wird der Grad der erreichbaren Wasserfestigkeit dieses Lackfilms im allgemeinen herabgesetzt.

Aus der DE-OS 2 804 216 (= US-PS 4 281 068) ist es bekannt, wässrige Emulsionen von Gemischen ungesättigter Polyester herzustellen. 5-50 Gew.-% des Gemisches der ungesättigten Polyester bestehen aus einem oder mehreren ungesättigten Polyestern, die einkondensierte Polyalkylenglykole und Allyloxygruppen enthalten. Sie fungieren als einbaubare Emulgatoren. Derartige Emulgatorpolyester sind jedoch zum Emulgieren von Acryloylgruppen enthaltenden Präpolymeren ungeeignet, da sie nach kurzer Zeit eine Gelierung der Mischung bewirken.

In der DE-OS 3 200 907 (= US-PS 4 451 509) werden wässrige, strahlungshärtbare Emulsionen aus Gemischen von einbaubaren Polyesteremulgatoren und Acryloylgruppen tragenden Präpolymeren beschrieben.

Die Emulgatorpolyester enthalten Alkylenoxy- und Benzyloxygruppen, jedoch keine reaktiven Acryloylgruppen und sind daher mit den Acryloylgruppen enthaltenden, strahlungshärtbaren, emulgierbaren Polyestern vorliegender Anmeldung nicht zu vergleichen.

Dem Fachmann ist es weiterhin bekannt, dass der Einbau von Polyalkylenglykolen in Polyester zu wasseremulgierbaren bzw. wasserlöslichen Produkten führt. Es sind jedoch nur solche Polyester gut mit Wasser verdünnbar, die einen hohen Gehalt an Polyalkylenglykolen besitzen. Dies wiederum führt zu Lackfilmen mit nicht ausreichender Wasserfestigkeit (siehe Vergleichsbeispiel 3).

Aufgabe der vorliegenden Erfindung war es, strahlenhärtbare, wasseremulgierbare, von Reaktivverdünnern freie Acrylolgruppen enthaltende Präpolymere bereitzustellen. Dabei sollte auf die Mitverwendung externer Emulgatoren und/oder Lösungsmitteln als Hilfsmittel zur Emulgierung verzichtet werden können. Die aus den Emulsionen erhaltenen Lackfilme sollten mit hoher Geschwindigkeit durch Strahlen härten, sie sollten eine gute Wasserfestigkeit und gute mechanische Werte (wie z.B. Härte) aufweisen.

Die Aufgabe wurde dadurch gelöst, dass Acryloylgruppen enthaltende Polyester einer bestimmten Zusammensetzung in zwei Stufen hergestellt wurden. In einer ersten Stufe werden Dicarbonsäureanhydride mit Diolen umgesetzt, die z.T. Polyalkylenglykole sind. In einer zweiten Stufe erfolgt dann eine Weiterveresterung mit oxalkylierten, dreiwertigen, gesättigten Alkoholen sowie mit Acrylsäure.

Gegenstand der vorliegenden Erfindung sind somit Acryloylgruppen enthaltende Polyester mit Säurezahlen SZ von 1-50 mg KOH/g Substanz aus cokondensierten Einheiten von

(A)  1,0 Mol mindestens eines Dicarbonsäureanhydrids,

(B)  0,02-0,08 Mol, mindestens eines gesättigten, zweiwertigen Polyetheralkohols mit einem Molekulargewicht $\overline{M}n$ von 1000 bis 2000,

(C)  0,48-0,42 Mol, mindestens eines zweiwertigen, gesättigten Alkohols,

(D)  1,0 Mol mindestens eines dreiwertigen, gesättigten, oxalkylierten Alkohols mit einem Oxalkylierungsgrad von 2 bis 6 und

(E)  1,0-2,0 Mol, vorzugsweise 1,3-2,0 Mol, Acrylsäure, hergestellt gemäss dem Verfahren nach Anspruch 2 oder 3.

Als Dicarbonsäureanhydride können beispielsweise eingesetzt werden: Maleinsäureanhydrid, Citraconsäureanhydrid, Tetrahydrophthalsäureanhydrid, Hexahydrophthalsäureanhydrid und Phthalsäureanhydrid. Bevorzugt ist Maleinsäureanhydrid.

Die gesättigten zweiwertigen Polyetheralkohole sind bevorzugt Polyalkylenglykole mit 2 bis 4 C-Atomen in der Alkylengruppe. Die Polyethylenglykole besitzen Molgewichte $\overline{M}n$ zwischen 1000 und 2000.

Beispiele für die zweiwertigen gesättigten Alkohole sind:

Ethylenglykol, Propylenglykol-1,2, Propylenglykol-1,3, Butandiol-1,2, Butandiol-1,3, Butandiol-1,4, Pentandiol-1,3, Hexandiol-1,6 und 2-Ethylhexandiol. Bevorzugt sind Ethylenglykol und Propylenglykol-1,2.

Die dreiwertigen, gesättigten, oxalkylierten Alkohole werden durch Oxalkylierung der entsprechenden dreiwertigen, gesättigten Alkohole hergestellt, wobei der Oxalkylierungsgrad 2 bis 6 betragen kann. Beispiele für dreiwertige, gesättigte Alkohole sind: Glycerin, Trimethylolethan und Trimethylolpropan. Bevorzugt ist Trimethylolpropan mit einem Oxalkylierungsgrad von etwa 4.

Der Oxalkylierungsgrad gibt die Anzahl der Mole 1,2-Alkylenoxid an, die an ein Mol Triol im Durchschnitt angelagert worden sind. Als 1,2-Alkylenoxide kommen Ethylenoxid oder Propylenoxid oder deren Mischungen in Frage.

Gegenstand der vorliegenden Erfindung ist auch ein Verfahren zur Herstellung von Acryloylgruppen enthaltenden Polyestern mit Säurezahlen von 1-50 mg KOH/g Substanz, dadurch gekennzeichnet, dass man als Ausgangsmaterialien

(A) 1,0 Mol mindestens eines Dicarbonsäureanhydrids,

(B) 0,02-0,08 Mol, mindestens eines gesättigten, zweiwertigen Polyetheralkohols mit einem Molekulargewicht $\overline{M}n$ von 1000 bis 2000,

(C) 0,48-0,42 Mol, mindestens eines zweiwertigen, gesättigten Alkohols,

(D) 1,0 Mol mindestens eines dreiwertigen, gesättigten oxalkylierten Alkohols mit einem Oxalkylierungsgrad von 2 bis 6 und

(E) 1,0-2,0 Mol, vorzugsweise 1,3-2,0 Mol, Acrylsäure einsetzt und die Komponenten (A), (B) und (C) in einer ersten Stufe bei Temperaturen von 75°C bis 130°C in einem wasserunlöslichen Lösungsmittel drei bis acht Stunden unter Stickstoff erhitzt, danach in einer zweiten Stufe die Komponenten (D) und (E) nacheinander oder als Mischung zusetzt und das Gemisch bei Temperaturen von 75°C bis 130°C in Gegenwart eines sauren Katalysators und eines Inhibitors unter azeotropen Bedingungen so lange erhitzt, bis sich kein Wasser mehr abscheidet und das verbleibende Lösungsmittel abdestilliert.

Es ist auch möglich, statt in der ersten Stufe die Komponenten (A), (B) und (C) umzusetzen und dann in einer weiteren Stufe (D) und (E) zuzusetzen und zu kondensieren, die erste Stufe mit den Komponenten (A) und (B) und die zweite Stufe mit den Komponenten (C), (D) und (E) durchzuführen. Die Umsetzung (A), (B) und (C) in der ersten Stufe, gefolgt von (D) und (E) in der zweiten Stufe, ist bevorzugt.

Saure Katalysatoren, die die Veresterung beschleunigen, sind z.B. Schwefelsäure, p-Toluolsulfonsäure und Naphthalinsulfonsäure. Sie werden in Mengen von 0,1 bis 3 Gew.-%, bezogen auf Summe der Komponenten (A) bis (E), eingesetzt. Falls gewünscht, können auch mehrere Katalysatoren eingesetzt werden.

Die Säurezahlen der Polyester betragen 1 bis 50, vorzugsweise 2 bis 20, mg KOH pro g Substanz.

Um die erfindungsgemässen Produkte vor unerwünschter vorzeitiger Polymerisation zu bewahren, empfiehlt es sich, bereits bei der Herstellung 0,01-0,3 Gew.-% eines oder mehrerer Polymerisationsinhibitoren oder Antioxidantien, bezogen auf Summe aus (A) bis (E), zuzusetzen. Geeignete Stabilisatoren sind z.B. in «Methoden der organischen Chemie» (Houben-Weyl), 4. Auflage, Band XIV/1, S. 433 ff, Georg Thieme Verlag, Stuttgart 1961, beschrieben.

Gegenstand der vorliegenden Erfindung ist auch die Verwendung der Polyester als strahlenhärtbare Bindemittel in wässriger Emulsion.

Die Emulsionen können 10-70 Gew.-%, vorzugsweise 30-70 Gew.-%, der erfindungsgemässen Umsetzungsprodukte enthalten. Die Herstellung der Emulsionen kann durch Einrühren von Wasser z.B. durch einfaches Rühren oder mittels Dissolver erfolgen.

Zur Ausbildung einer feinteiligen Emulsion ist portionsweiser Wasserzusatz bei Temperaturen unter 30°C vorteilhaft. Bei optimaler Scherung werden Öl-in-Wasser-Emulsionen gebildet.

Die erfindungsgemässen Umsetzungsprodukte können die zur Erzielung besonderer technischer Effekte notwendigen Komponenten wie Füllstoffe, Pigmente, Farbstoffe, Thixotropiermittel und Glättmittel, Abdeckmittel zur Ausschaltung der Luftinhibierung, Mattierungsmittel und Verlaufmittel in üblichen Mengen enthalten.

Die Emulsionen eignen sich hervorragend zur Verarbeitung auf den herkömmlichen mit Giessmaschinen ausgerüsteten Lackierstrassen. Weiter sind sie durch Walzen und Spritzen applizierbar. Bevorzugte Substrate sind Holz und holzähnliche Produkte, z.B. Furniere imitierende Folien.

Die Härtung erfolgt mit ionisierender, z.B. energiereicher Elektronenstrahlung bzw. in Gegenwart von Photoinitiatoren mit UV-Strahlung, vorteilhaft erst nach Wasserabgabe des Lackfilms. In der Regel erfolgt die Verfilmung durch Abgabe des Wassers in den bei Lacken üblichen Schichtdicken (10-200 μm Trockenschichtdicke) bereits in kurzer Zeit, ohne dass Wärme zugeführt werden muss. Falls gewünscht, kann die Filmbildung auch bei Temperaturen bis 100°C vorgenommen werden.

Als Photoinitiatoren sind die für die Strahlungshärtung hinlänglich bekannten Verbindungen geeignet, wie beispielsweise Benzophenon sowie ganz allgemein aromatische Ketoverbindungen, Alkylbenzophenone, halogenmethylierte Benzophenone gemäss der DE-OS 1 949 010, Michlers Keton, Anthron, halogenierte Benzophenone. Ebenfalls wirksame Photoinitiatoren stellen Anthrachinon und zahlreiche seiner Derivate dar, beispielsweise β-Methylanthrachinon, tert.-Butylanthrachinon und Anthrachinoncarbonsäureester, ebenso Oximester gemäss DE-OS 1 795 089. Weiter geeignet sind Phenylglyoxylsäureester gemäss DE-OS 2 825 955.

Bevorzugte Photoinitiatoren sind Benzoin und seine Derivate, wie beispielsweise in den DE-OS

1 769 168, 1 769 853, 1 769 854, 1 807 297, 1 807 301, 1 919 678 und der DE-AS 1 694 143 beschrieben, ferner Benzilketale wie z.B. Benzildimethylketale und Hydroxyalkylphenone wie z.B. 2-Hydroxy-2-methyl-1-phenyl-propan-1-on.

Der Photoinitiator kann dem Umsetzungsprodukt vor dem Emulgieren oder, wenn ausreichende Wasserlöslichkeit besteht, der Emulsion zugesetzt werden.

*Beispiele*

In den nachfolgenden Beispielen beziehen sich die Prozentangaben auf das Gewicht. Die Viskositätsmessungen wurden im Höppler-Kugelfallviskosimeter (DIN 53015) bei 20°C durchgeführt.

In allen Beispielen wurde die Kondensation 70%ig in Toluol in Gegenwart von 0,75% p-Toluolsulfonsäure als Katalysator und 0,08% p-Methoxyphenol + 0,08% di-tert.Butylhydrochinon als Inhibitoren, stets bezogen auf Summe der Komponenten (A) bis (E), durchgeführt.

Die in der nachfolgenden Tabelle 1 und 2 aufgeführten Ausgangskomponenten (A) bis (C) werden in Toluol unter $N_2$ 6 Stunden auf 110 bis 120°C erhitzt. Nach Zugabe der Komponenten (D) und (E) sowie Katalysator und Inhibitoren wird das Gemisch weiter bei 110 bis 130°C so lange erhitzt, bis sich kein Wasser mehr abscheidet. Nach Abkühlen wird bei 50-90°C das Lösungsmittel unter Vakuum abdestilliert.

Die Wasserfestigkeit der durch UV-Strahlen ausgehärteten Filme wurde geprüft, indem die Filme mit Wasser benetzt und nach einer Einwirkungsdauer von 16 Stunden bei Raumtemperatur bewertet wurden. Die ausgehärteten Beschichtungen wurden auf ihre Chemikalienfestigkeit geprüft, indem sie mit einem Gemisch aus Wasser und Ethanol im Verhältnis 1:1 bzw. mit Ethylacetat oder mit Aceton benetzt und nach 8 Stunden bewertet wurden. Wasserfest und chemikalienfest bedeuten keine sichtbare Veränderung des Films durch Fleckenbildung, Erweichen und Loslösen des Films von der Unterlage.

*Tabelle 1*

| Ausgangsmaterialien (Mol) | erfindungsgemässe Beispiele | | | | | |
|---|---|---|---|---|---|---|
| | 1 | 2 | 3 | 4 | 5 | 6 |
| (A) Maleinsäureanhydrid | 1,0 | 1,0 | 1,0 | 1,0 | 1,0 | — |
|      Phthalsäureanhydrid | — | — | — | — | — | 1,0 |
| (B) Polyethylenglykol   1000 | — | — | — | 0,07 | — | — |
|      »           1500 | 0,02 | 0,03 | 0,05 | — | — | 0,03 |
|      »           2000 | — | — | — | — | 0,023 | — |
| (C) Ethylenglykol | — | 0,47 | — | — | — | — |
|      Propylenglykol-1,2 | 0,48 | — | 0,45 | 0,43 | 0,48 | 0,47 |
| (D) Oxethyliertes Trimethylolpropan (Oxethylierungsgrad: 4) | 1,0 | 1,0 | 1,0 | 1,0 | 1,0 | 1,0 |
| (E) Acrylsäure | 1,7 | 1,8 | 1,8 | 1,8 | 1,8 | 1,8 |
| Eigenschaften des Polyesters: | | | | | | |
|      Säurezahl (mg KOH/g Substanz) | 10 | 13 | 13 | 11 | 11 | 37 |
|      Viskosität (mPas) | 9600 | 6800 | 5700 | 6200 | 6500 | 10100 |

Zur Herstellung der Emulsionen werden je 250 g der erfindungsgemässen Polyester der Beispiele 1-6 mit je 5 g Photoinitiator, 1-(4-Isopropylphenyl)-2--hydroxy-2-methyl-propan-1-on, gemischt mit jeweils 110 g Wasser im Dissolver bei 8000 U/min. 2 Minuten geschert und anschliessend mit Wasser unter Rühren (1000 U/min) auf 50% Festkörpergehalt eingestellt. Es entstehen Öl-in-Wasser-Emulsionen mit sehr guten Stabilität (über 6 Monate bei Raumtemperatur).

Ein Auftrag der vorstehenden Emulsionen mit Polyestern der Beispiele 1-6 von 70 g/m² auf eine Holzfläche härtet nach Abdunsten des Wassers (7 Minuten bei 50°C) unter IST-Strahler (Impuls-Strahler der Fa. Strahlentechnik Hildebrand, Werner und Pfleiderer, Leistung 80 Watt/cm, Strahlerabstand 20 cm) mit mindestens 8 m/min Verarbeitungsgeschwindigkeit zu einwandfrei wasser- und chemikalienfesten Lackfilmen (Dicke: 35 μm) mit Pendelhärten (nach König, DIN 53157) von 70 bis 100 sec.

Keine emulgierbaren Polyesterharze entstehen, wenn statt einer Fahrweise wie in den Patentansprüchen 2 und 3 beschrieben eine andere gewählt wird, wie folgende Vergleichsbeispiele 1 und 2 zeigen:

*Vergleichsbeispiel 1*

Beispiel 1 wird exakt wiederholt mit der Änderung, dass anstelle des Gemisches (A) bis (C) das Gemisch (A) bis (D) in einer ersten Stufe erhitzt wird. Der erhaltene Polyester hat folgende Kenndaten: Säurezahl: 16; Viskosität: 10500 mPas.

*Vergleichsbeispiel 2*

Beispiel 1 wird exakt wiederholt mit der Änderung, dass anstelle einer zweistufigen Fahrweise alle Komponenten (A) bis (E) zusammen in Toluol bei 110-130°C erhitzt werden, bis sich kein Wasser mehr abscheidet. Der erhaltene Polyester hat folgende Kennzahlen: Säurezahl 18; Viskosität: 10125 mPas.

Sowohl das Polyesterharz von Vergleichsbeispiel 1 als auch das von Vergleichsbeispiel 2 können ohne Zusatzmittel nicht in Wasser emulgiert werden.

Erhöht man die Mengen Polyalkylenglykol über die beanspruchte obere Grenze, so lässt sich auch ein in einer Einstufenfahrweise hergestellten Polyester in Wasser emulgieren, wie Vergleichsbeispiel 3 zeigt. Allerdings ist die Wasserfestigkeit eines aus diesem Polyester erhaltenen, UV-gehärteten Films ungenügend.

*Vergleichsbeispiel 3*

1,0 mol Maleinsäureanhydrid, 0,1 mol Polyethylenglykol (Molekulargewicht 1500), 0,4 mol Propylenglykol-1,2, 1,0 mol oxethyliertes Trimethylolpropan (Oxethylierungsgrad 4) und 1,8 mol Acrylsäure werden 70%ig in Toluol gelöst und nach Zugabe von Katalysator und Inhibitoren so lange bei 110-130°C erhitzt, bis sich kein Wasser mehr abscheidet. Nach Abkühlen wird das Lösungsmittel bei 30-90°C unter Vakuum abdestilliert. Der erhaltene Polyester hat die Säurezahl 13 und kristallisiert nach einiger Zeit aus. Mit diesem Polyester kann man unter den Bedingungen, wie für die Beispiele 1-6 angegeben, eine 50%ige stabile Emulsion herstellen.

Gemäss den Bedingungen der Beispiele 1-6 hergestellte und ausgehärtete Lackfilme sind jedoch nicht wasserfest. Nach 16 Stunden Benetzung mit Wasser haben sie sich vollständig von der Holzfläche gelöst.

Tabelle 2 zeigt Vergleichsprodukte, die jeweils statt eines erfindungsgemässen Bausteins einen nicht erfindungsgemässen, aber ähnlichen Baustein enthalten. Das Herstellverfahren ist erfindungsgemäss. Die Polyester der Vergleichsbeispiele unterscheiden sich durch folgende Parameter von erfindungsgemässen Polyestern.

Vergleichsbeispiele

| | |
|---|---|
| 4 | Trimethylolpropan (TMP) anstelle von oxethyliertem TMP, |
| 5 | Oxalkyliertes Pentaerythrit anstelle von oxethyliertem TMP, |
| 6 | Polyethylenglykol, Molekulargewicht unterhalb 1000, |
| 7 | Polyethylenglykol, Molekulargewicht oberhalb 2000, |
| 8 | Fumarsäure anstelle eines Dicarbonsäureanhydrids. |

*Tabelle 2*

| Ausgangsmaterialien (Mol) | | Vergleichsbeispiele | | | | |
|---|---|---|---|---|---|---|
| | | 4 | 5 | 6 | 7 | 8 |
| A | Maleinsäureanhydrid | 1,0 | 1,0 | 1,0 | 1,0 | — |
| | Fumarsäure | — | — | — | — | 1,0 |
| B | Polyethylenglykol 1550 | 0,03 | 0,03 | — | — | 0,03 |
| | » 600 | — | — | 0,08 | — | — |
| | » 4000 | — | — | — | 0,012 | — |
| | (Zahlen = Molekulargewichte) | | | | | |
| C | Propylenglykol-1,2 | 0,47 | 0,47 | 0,42 | 0,48 | 0,47 |
| D | Oxethyliertes Trimethylolpropan (Oxethylierungsgrad 4); | — | — | 1,0 | 1,0 | 1,0 |
| | oxalkyliertes Pentaerythrit (5 mol Propylenoxid und 10 mol Ethylenoxid pro mol Pentaerythrit) | — | 1,0 | — | — | — |
| | Trimethylolpropan | 1,0 | — | — | — | — |
| E | Acrylsäure | 1,8 | 2,5 | 1,8 | 1,8 | 1,8 |
| | Säurezahl | | 12 | 12 | 11 | 18 |
| | Viskosität des Polyesters (mPa·s) | Gel | 3000 | 6500 | kristal. | 2300 |

Der Polyester des Vergleichsbeispiels 4 ist geliert und daher nicht emulgierbar. Die Polyesterharze der Vergleichsbeispiele 5 bis 8 ergeben ohne Zusatzmittel keine Öl-in-Wasser-Emulsionen.

**Patentansprüche**

1. Acryloylgruppen enthaltende Polyester mit Säurezahlen SZ von 1-50 mg KOH/g Substanz aus cokondensierten Einheiten von
(A) 1,0 Mol mindestens eines Dicarbonsäureanhydrids,
(B) 0,02-0,08 Mol, mindestens eines gesättigten, zweiwertigen Polyetheralkohols mit einem Molekulargewicht $\overline{M}n$ von 1000 bis 2000,
(C) 0,48-0,42 Mol, mindestens eines zweiwertigen, gesättigten Alkohols,
(D) 1,0 Mol mindestens eines dreiwertigen, gesättigten, oxalkylierten Alkohols mit einem Oxalkylierungsgrad von 2 bis 6 und
(E) 1,0-2,0 Mol Acrylsäure,
hergestellt durch Umsetzung a) der Komponenten (A), (B) und (C) oder b) der Komponenten (A) und (B), die in einer ersten Stufe bei Temperaturen von 75°C bis 130°C in einem wasserunlöslichen Lösungsmittel drei bis acht Stunden unter Stickstoff erhitzt werden, danach in einer zweiten Stufe a) die Komponenten (D) und (E) oder b) die Komponenten (C), (D) und (E), nacheinander oder als Mischung, zugesetzt werden und das Gemisch bei Temperaturen von 75°C bis 130°C in Gegenwart eines sauren Katalysators und eines Inhibitors unter azeotropen Bedingungen so lange erhitzt wird, bis sich kein Wasser mehr abscheidet und das verbleibende Lösungsmittel abdestilliert ist.

2. Verfahren zur Herstellung von Acryloylgruppen enthaltenden Polyestern mit Säurezahlen von 1-50 mg KOH/g Substanz, dadurch gekennzeichnet, dass man als Ausgangsmaterialien

(A)  1,0 Mol mindestens eines Dicarbonsäureanhydrids,

(B)  0,02-0,08 Mol mindestens eines gesättigten, zweiwertigen Polyetheralkohols mit einem Molekulargewicht $\overline{M}n$ von 1000 bis 2000,

(C)  0,48-0,42 Mol, mindestens eines zweiwertigen, gesättigten Alkohols,

(D)  1,0 Mol mindestens eines dreiwertigen, gesättigten, oxalkylierten Alkohols mit einem Oxalkylierungsgrad von 2 bis 6 und

(E)  1,0-2,0 Mol Acrylsäure

einsetzt und die Komponenten (A), (B) und (C) in einer ersten Stufe bei Temperaturen von 75°C bis 130°C in einem wasserunlöslichen Lösungsmittel drei bis acht Stunden unter Stickstoff erhitzt, danach in einer zweiten Stufe die Komponenten (D) und (E) nacheinander oder als Mischung zusetzt und das Gemisch bei Temperaturen von 75°C bis 130°C in Gegenwart eines sauren Katalysators und eines Inhibitors unter azeotropen Bedingungen so lange erhitzt, bis sich kein Wasser mehr abscheidet und das verbleibende Lösungsmittel abdestilliert.

3. Verfahren gemäss Anspruch 2, dadurch gekennzeichnet, dass man in der ersten Stufe die Komponenten (A) und (B) und anschliessend in der zweiten Stufe die Komponenten (C), (D) und (E) nacheinander oder als Mischung zusetzt.

4. Verwendung der Acryloylgruppen enthaltenden Polyester gemäss Anspruch 1 als strahlenhärtbares Bindemittel in wässriger Emulsion.

## Claims

1. Polyesters containing acryloyl groups, having acid numbers AN of 1-50 mg of KOH/g of substance and consisting of cocondensed units of

(A)  1.0 mole of at least one dicarboxylic acid anhydride,

(B)  0.02-0.08 mole of at least one saturated dihydric polyether alcohol having a molecular weight $\overline{M}n$ of 1,000 to 2,000,

(C)  0.48-0.42 mole, of at least one dihydric saturated alcohol,

(D)  1.0 mole of at least one trihydric saturated oxyalkylated alcohol with a degree of oxyalkylation of 2 to 6 and

(E)  1.0-2.0 moles of acrylic acid,

produced by reacting a) components (A), (B) and (C) or b) components (A) and (B), which, in a first stage, are heated at temperatures of 75°C to 130°C in a water-insoluble solvent under nitrogen for three to eight hours, and then, in a second stage, a) components (D) and (E) or b) components (C), (D) and (E) are added in succession or in the form of a mixture and the mixture is heated at temperatures of 75°C to 130°C in the presence of an acid catalyst and of an inhibitor, under azeotropic conditions, until no more water separates off and the remaining solvent has been distilled off.

2. Process for the production of polyesters containing acryloyl groups and having acid numbers of 1-50 mg KOH/g of substance, characterised in that

(A)  1.0 mole of at least one dicarboxylic acid anhydride,

(B)  0.02-0.08 mole of at least one saturated dihydric polyether alcohol having a molecular weight $\overline{M}n$ of 1,000 to 2,000,

(C)  0.48-0.42 mole of at least one dihydric saturated alcohol,

(D)  1.0 mole of at least one trihydric saturated oxyalkylated alcohol with a degree of oxyalkylation of 2 to 6 and

(E)  1.0-2.0 moles of acrylic acid

are used as starting materials and components (A), (B) and (C) are heated, in a first stage, at temperatures of 75°C to 130°C in a water-insoluble solvent under nitrogen for three to eight hours, and then, in a second stage, components (D) and (E) are added in succession or in the form of a mixture and the mixture is heated at temperatures of 75°C to 130°C in the presence of an acid catalyst and of an inhibitor under azeotropic conditions until no more water separates off and the remaining solvent distils off.

3. Process according to Claim 2, characterised in that, in the first stage, components (A) and (B) are added and then, in the second stage, components (C), (D) and (E) are added in succession or in the form of a mixture.

4. Use of the polyesters containing acryloyl groups, according to Claim 1, as a radiation-curable binder in the form of an aqueous emulsion.

## Revendications

1. Polyesters contenant des groupes acryloyle, ayant des indices d'acide de 1-50 mg de KOH/g de substance et constitués de motifs cocondensés comprenant:

(A)  1 mole d'au moins un anhydride d'acide dicarboxylique,

(B)  0,02-0,08 mole d'au moins un polyéther alcool saturé bivalent ayant un poids moléculaire $\overline{M}n$ de 1.000 à 2.000,

(C)  0,48-0,42 mole d'au moins un alcool bivalent saturé,

(D)  1 mole d'au moins un alcool trivalent saturé oxalkylé ayant un degré d'oxalkylation de 2 à 6, et

(E)  1-2 moles d'acide acrylique,

que l'on prépare par réaction a) des composants (A), (B) et (C) ou b) des composants (A) et (B) qui, au cours d'une première étape, sont chauffés à des températures de 75°C à 130°C dans un solvant insoluble dans l'eau pendant 3 à 8 heures sous une atmosphère d'azote, après quoi, au cours d'une deuxième étape, on ajoute a) les composants (D) et (E) ou b) les composants (C), (D) et (E) successivement ou sous forme d'un mélange et on chauffe le mélange à des températures de 75 à 130°C en présence d'un catalyseur acide et d'un inhibiteur dans des conditions azéotropes jusqu'à ce qu'il ne se sépare plus d'eau, puis on sépare le solvant résiduel par distillation.

2. Procédé de préparation de polyesters contenant des groupes acryloyle et ayant des indices d'acide de 1-50 mg de KOH/g de substance, caractérisé an ce que, comme matières de départ, on utilise:

(A) 1 mole d'au moins un anhydride d'acide dicarboxylique,

(B) 0,02-0,08 mole d'au moins un polyéther-alcool saturé bivalent ayant un poids moléculaire $\overline{M}n$ de 1.000 à 2.000,

(C) 0,48-0,42 mole d'au moins un alcool bivalent saturé,

(D) 1 mole d'au moins un alcool trivalent saturé oxalkylé ayant un degré d'oxalkylation de 2 à 6, et

(E) 1-2 moles d'acide acrylique,

et, au cours d'une première étape, on chauffe les composants (A), (B) et (C) à des températures de 75°C à 130°C dans un solvant insoluble dans l'eau pendant 3 à 8 heures sous une atmosphère d'azote après quoi, au cours d'une deuxième étape, on ajoute les composants (D) et (E) successivement ou sous forme d'un mélange et on chauffe le mélange à des températures de 75°C à 130°C en présence d'un catalyseur acide et d'un inhibiteur dans des conditions azéotropes jusqu'à ce qu'il ne se sépare plus d'eau, puis on sépare le solvant résiduel par distillation.

3. Procédé selon la revendication 2, caractérisé en ce que, au cours de la première étape, on ajoute les composants (A) et (B) puis, au cours de la deuxième étape, on ajoute les composants (C), (D) et (E) successivement ou sous forme d'un mélange.

4. Utilisation des polyesters contenant des groupes acryloyle selon la revendication 1 comme agents liants durcissables par irradiation en émulsion aqueuse.